# EUROPEAN PATENT APPLICATION

(11) **EP 1 509 042 A1**
(43) Date of publication of application: **23.02.2005**
(21) Application number: 03018872.6
(22) Date of filing: 19.08.2003
(51) Int. Cl.: H04N 7/14, G06T 15/70

(54) **System and method for a mobile phone for classifying a facial expression**

(71) Applicant: Sony Ericsson Mobile Communications AB, 221 88 Lund (SE)
(72) Inventor: Taneda, Morio, Sony Ericsson Mobile Communications, 85609 Aschheim-Dornach (DE)
(74) Representative: Körber, Martin, Dipl.-Phys.

(57) **Abstract**

The invention relates to a system for a mobile phone for classifying a facial expression comprising a storage means (3) for storing a first picture of a user with a neutral facial expression and a camera (2) for taking a second picture of said user. Hereby, the system comprises a classification means (4) for classifying the facial expression of the user in the second picture by comparing the second picture with the first stored neutral picture.
The invention further relates to a method for executing the steps on this system.

## Description

The invention relates to a system for a mobile phone for classifying a facial expression according to claim 1 and a method for a mobile phone for classifying a facial expression according to claim 10.

Mobile devices present some challenges to Internet community participation as well as instant messaging. Hereby, the actual emotional state or the actual mood of the user may be of interest. In order to obtain an impartial and objective judgement of the emotional state of the user an automatic mood detection and classification is required.

Document JP 2002-2244197 discloses an automatic photographing machine which can visually express the user's mental and physical state. The photographing machine comprises a camera which photographs the user's face and a sensor section which is brought into contact with the palms of the hand on both sides of the user in order to sense the physiological signal of the human body. The measured physiological signal is further interpreted and explains the state of the user's vital energy. With the combination of the user's vital energy and the user's face photographed with the afore-mentioned camera, a photo is developed showing the user's face embedded in a scene according to the user's emotional state.

The disadvantage of this invention is that the user's emotional state is only measured by the signals from the palms of the hands. This may lead to incorrect information about the user's emotional state which usually is best seen from the facial expression of a user.

Document JP 2000-331190 discloses a device to reproduce the head actions and the glancing direction of a user in a virtual environment. Hereby, an image of a user is taken by a camera and the tilt of a face axis, the rotations caused around the face axis, the glancing direction and the face expression information are detected. The factors which are detected are sent to a computer which deforms a previously stored three-dimensional computer graphics according to the data on the said factors and then reproduces an image of the user in a virtual environment.

The disadvantage of this device is the imuserality as one stored picture is used to represent several users which may lead to a false interpretation of the emotional state of a single user.

It is therefore the object of the present invention to provide a system and method for an automatic classification of the emotional state or the actual mood of a user, whereby a personalisation, that is an adaptation of the system and method for a specific user, and an impartial and objective classification of the emotional state leads to a reduction of false judgements of the mood of a user.

This object is achieved by a system as defined in claim 1 and a method as defined in claim 10. Further embodiments of the invention are set out in the independent claims.

According to the present invention a system for a mobile phone for classifying a facial expression is described comprising a storage means for storing a first picture of a user with a neutral facial expression, a camera for taking a second picture of said user and a classification means for classifying the facial expression of the user in the second picture by comparing the second picture with the first stored neutral picture.

Further, according to the present invention a method for a mobile phone for classifying a facial expression is described comprising the steps of storing a first picture of a user with a neutral facial expression in a storage means, taking a second picture of said user with a camera and classifying the facial expression of the user in the second picture by comparing the second picture with the first stored neutral picture.

By comparing a stored picture and a second taken picture of the same user the mood detection is improved as the system and method is useralised and adapted to one user. Further, by comparing the faces a more effective mood detection is possible as the face is the part of a user where emotions can be seen best.

Preferably the classification means compares predefined parameters in the first and second picture.

Advantageously the classification means classifies the facial expression of the user in the second picture into a category out of a number of predefined categories.

Further, advantageously a conversion means converts the facial expression category into a specific protocol data unit.

Preferably a transmission means transmits the data unit to an internet community site.

Further, preferably a conversion means converts the facial expression category into a template message.

An output means can output the message to the user.

An input means can accept input by a user to be inserted into the message.

Advantageously a transmission means transmits the message to an internet community site.

Embodiments of the invention will now be described by way of example only with reference to the accompanying drawings, in which:
- Fig. 1: is a block diagram showing schematically the elements of the system and
- Fig. 2: is a flow chart showing the process of the detection and application of the mood.

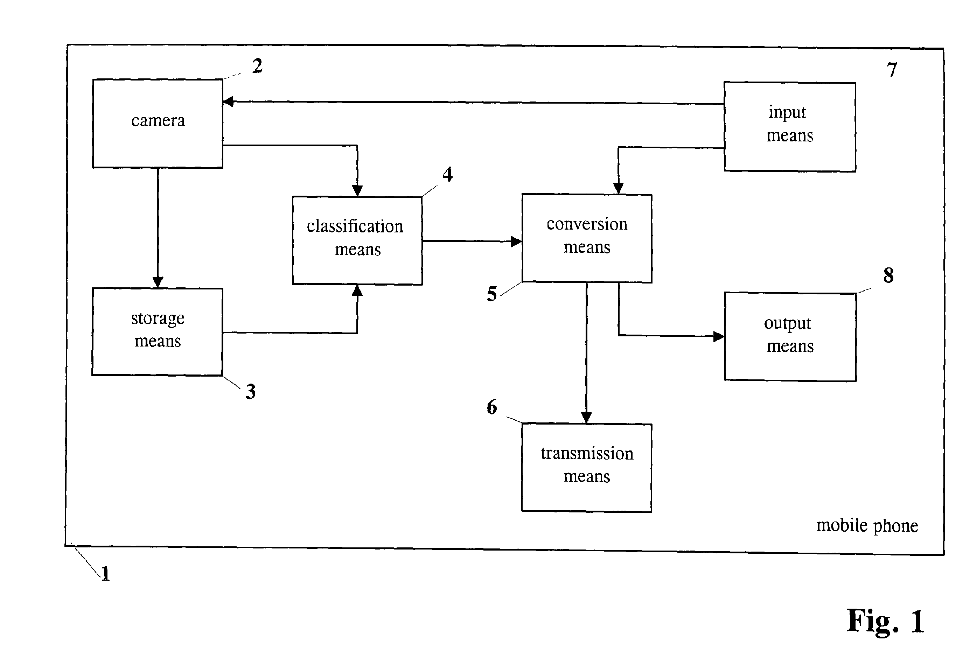

Fig. 1 shows a schematic block diagram of a mobile phone for classifying a facial expression according to the present invention.

The shown embodiment comprises a mobile phone 1 for a wireless communication system according for example to the GSM and/or UMTS standard, in which different components are integrated.

A camera 2 is integrated in the mobile phone 1 or attachable to the mobile phone 1 by a connector, a cable or a wireless network. The camera 2 serves for taking a picture of a user. Alternatively, it is possible to transmit a picture of a user to the mobile phone 1 over the air, e.g. via infrared, or by a serial cable.

A storage means 3 serves for storing one or more pictures of the user. The pictures may show the same motif or different motifs, e.g. pictures of different users, pictures of the same user at varying angles, moments or sizes. Further, in the storage means 3 parameters are stored which are used for detecting the actual mood of the user from his/her face. Such parameters are directly related to physical attributes in the user's face, such as the size, width and height of the eyes, size of the pupils, line of vision, position and shape of eyebrows, size and shape of mouth and lips, position of the corners of the mouth and position and shape of ala of the nose. The parameters further include open or closed mouth and eyes, the existence, shape and position of wrinkles on the forehead or elsewhere, e.g. around the corners of the mouth or at the corners of the eyes. Dependent on these parameters according to a procedure explained below the actual mood or emotional state of the user is classified into different mood categories, for example joy, happiness, sadness, jealousy, envy, anger, fury, desperation, boredom, tiredness or neutral, which are also stored in the storage means 3.

Hereby, a first possibility is to determine or calculate the value of a parameter as an relative value, that is as a deviation from a reference value. In a face with a neutral expression for example the eyebrows have a certain position. For calculating the value of one of more parameters related to the eyebrows in a face having another expression, e.g. anger, the distance between one end of an eyebrow in the angry face and one end of an eyebrow in the neutral face is calculated by using the position of the end of the eyebrow in the neutral face as reference value.
A second possibility is to determine or calculate the value of a parameter as an absolute value, for example as the size of the eyes or of the mouth. An absolute value can be determined without comparing the face for which the value has to be calculated with another neutral face or reference points. Alternatively instead of determining the size of the eyes, a coordinate system can be overlaid the face and the position of the corners and the lids of the eyes can be determined according to said coordinate system. In the same way also the position of for example the eyebrows may be determined instead of using a neutral reference face.
A third possibility is the use of true or false parameters, that is a parameter, for which only two possibilities exist, e.g. is the mouth open or closed or are there wrinkles on the forehead or not.

The values for some or all parameters, for example for the size of the eyes, may have a limited range in order to avoid absurd values, e.g. a size of the eyes larger than the whole face, or to facilitate the calculations. Further, the values may be continuously variable, that is the value is not limited to certain conditions within the limitation range, or only discrete values are allowed. Within a range for example of 1 to 10 a continuously variable parameter can have every value between 1 and 10. Otherwise the parameter is allowed to have discrete values like only even numbers.

When the mood of a face on a picture has to be detected using the stored parameters, it is either possible to use all the stored parameters or to select one ore more parameters out of the plurality of stored parameters. The selection can either be done by the user or automatically, for example the minimum number of parameters necessary for a unique determination of the mood of the user is used.

The classification of the mood of the user into said different categories is done by a classification means 4. Hereby, the classification means 4 compares a first picture of a user having a neutral facial expression stored in the storage means 3 with a second picture of the same user taken by the camera 2 and temporarily or permanently stored in the storage means 3. The classification is hereby accomplished according to the parameters stored in the storage means 3, that is the classification means 4 for the selected parameter calculates the value from the second picture, compares it with the value on the first stored neutral picture and selects the mood category for the second picture. For a more simplified and effective comparison of the first and second picture the classification means 4 is able to find the face on the second picture taken by the camera 2 and to rotate and shift it into an orientation and size corresponding to the orientation and size of the face in the first stored neutral picture.

The classification of parameters into discrete categories is a task where an adaptive neural network (ANN) can be employed. A category may be described as a valuation function on the parameter space, where the category with the highest valuation is selected.
The set of categories may be fixed or possibly expandable either by the user or automatically. Data for a new category with predefined parameters can be loaded to the storage means 3 either wireless or over a cable. Otherwise the user can make a particular face, take a picture of this face with the camera 2, let the classification means 4 calculate the values of some or all parameters, according to the selection of the user, and store the values of the parameters in a new category. Or the user can input the values for the parameters manually without making a face and taking a picture. The benefit of adding expression categories is similar to providing new levels or maps for games, e.g. making a particular face to trigger newly added categories might provide a continued challenge to the user. A further possibility is the deletion or input of parameters for a more precise mood classification.

For communicating with the user, the mobile terminal 1 comprises an input means 7 and an output means 8. The input means 7 may be a keypad, a touchpad, one or more keys, recognition of speech or an interface for connecting an external device like a computer, an external keypad or an other mobile terminal. The output means 8 may be a display, a loudspeaker, vibration alert or an interface for connecting an external device like a computer, a printer, a TV, a loudspeaker or another mobile terminal.

The mood classification evaluated by the classification means 4 is sent to a conversion means 5, which converts the classification either into a specific protocol data unit, into a template message, an icon, an emoticon and/or a specific sound effect. The decision, into which data format the mood classification is converted, may be done automatically or by the user, e.g. the user when taking the second picture with the camera 2 can input via the input means 7 the desired format into which the mood classification is converted. Otherwise, before the mood classification is converted, the output means 8 outputs a signal, question or menu to the user for requesting the user to input or chose the desired data format for the conversion.

After the conversion the output means 8 can output the converted data to the user by showing a message, icon or emoticon on the display and/ or by playing a melody or sound effect. The user afterwards has the possibility to change the message, icon or emoticon or to add content by inputting text via the input means 7 or by selecting a different icon or emoticon from a menu.

The converted data is then sent to an Internet community site by a transmission means 6. The transmission means 6 may be an internal antenna integrated in the mobile phone 1, an external attachable antenna or an interface for transmitting data over the air, e.g. by infrared, or by using a cable.

Hereby, the user of the mobile phone 1 may have a permanent association with an internet community site over an internet service or a mobile network service. For sending data having a specific protocol format, messages, icons or emoticons the corresponding clients have to be installed in the mobile phone. Such clients are for example weblog clients, moblog clients or instant messaging clients.
In case, that the client is not already integrated and configured in the mobile phone 1, e.g. instant messaging clients for sending short messages, the corresponding software can be submitted to the mobile phone 1 wireless or over a cable, automatically or manually. The installation and configuration begins automatically after transmission of the software or is done by the user by inputting instructions over the input means 7 and/or by selecting various possibilities from a configuration menu.

The input means 7 which may be a keypad or a keypad with a further single key enables the user to input instructions for starting the process of determination of facial expression and/or for interfering said process.
A first possibility is, that a single key is programmed to trigger all the steps from taking and classifying the image to transmitting the data or message to a subscribed internet service or mobile network services without further actions by the user. Hereby, only one client may be installed in the mobile phone 1, otherwise before starting the process, the user is enabled to select over a menu the type of client he wants to use for sending the data, message, icon or emoticon.
In a second possibility the user controls every step of the process, that is it is possible to repeat one step several times and to confirm manually the prosecution of the process. The user can for example take several pictures and discard some or all of them, he can change or add categories or parameters, can choose the data type into which the conversion means 5 converts the mood classification, can add or change the content of the data to be sent and can choose the client service he wants to use.
In a combination of the first possibility having the automatically programmed single key and the second possibility, where the user can interfere the whole process, the process can be triggered by the single key including restricted possibilities for the user to interfere.

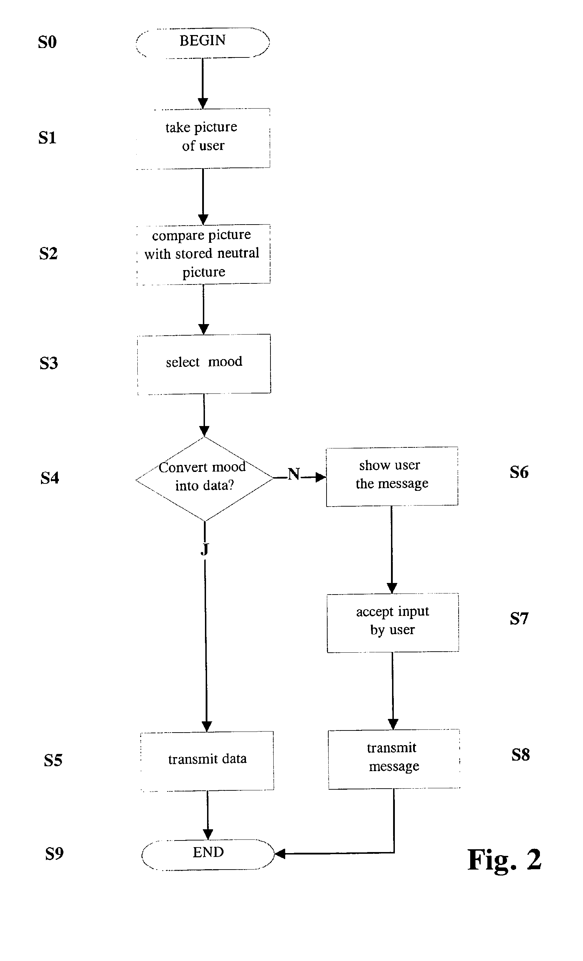

With reference to Fig. 2, the steps S0 to S9, which are executed by the classification system, are the following: after the beginning of the process in step S0, which may be the switching on of the mobile phone 1 or the pressing of the single key, in the next step S1 a picture of the user is taken with the camera 2. In step S2 the classification means 4 detects the face in the picture, rotates it and resizes it in order to compare the taken picture with the stored neutral picture according to the selected parameters. After the comparison of the parameters in step S2, the classification means 4 selects the mood category for the face on the second picture in step S3. In the next step S4 the mood classification may either be converted into a specific data protocol unit or into a template message including emoticons or icons. The selection of the desired data format for the conversion is done either at the beginning of the process or during step S4. In case the mood classification is converted into data, the transmission means 6 in a step S5 transmits the data having the specific protocol format. Otherwise, the output means 8 in step S6 shows the message, icon or emoticon to the user, the input means 7 in a step S7 accepts input by the user in order to change the message or to add content to the message and the transmission means 6 in step S8 transmits the message. The process ends in step S9 e.g. with switching off the mobile phone.

## Claims

1. System for a mobile phone for classifying a facial expression comprising
a storage means (3) for storing a first picture of a user with a neutral facial expression and
a camera (2) for taking a second picture of said user,
**characterised by**
a classification means (4) for classifying the facial expression of the user in the second picture by comparing the second picture with the first stored neutral picture.

2. System according to claim 1,
**characterised in,**
**that** the classification means (4) compares predefined parameters in the first and second picture.

3. System according to claim 1 or 2,
**characterised in,**
**that** the classification means (4) classifies the facial expression of the user in the second picture into a category out of a number of predefined categories.

4. System according to any of the claims 1 to 3,
**characterised in,**
**that** a conversion means (5) converts the facial expression category into a specific protocol data unit.

5. System according to claim 4,
**characterised in,**
**that** a transmission means (6) transmits the data unit to an internet community site.

6. System according to any of the claims 1 to 3,
**characterised in,**
**that** a conversion means (5) converts the facial expression category into a template message.

7. System according to claim 6,
**characterised in,**
**that** an output means (8) outputs the message to the user.

8. System according to claim 6 or 7,
**characterised in,**
**that** an input means (7) accepts input by a user to be inserted into the message.

9. System according to claim 6, 7 or 8,
**characterised in,**
**that** a transmission means (6) transmits the message to an internet community site.

10. Method for a mobile phone for classifying a facial expression
comprising the steps of
storing a first picture of a user with a neutral facial expression in a storage means (3) and
taking a second picture of said user with a camera (2)
**characterised by**
classifying the facial expression of the user in the second picture by comparing the second picture with the first stored neutral picture.

11. Method according to claim 10,
**characterised by**
comparing predefined parameters in the first and second picture.

12. Method according to claim 10 or 11,
**characterised by**
classifying the facial expression of the user in the second picture into a category out of a number of predefined categories.

13. Method according to any of the claims 10 to 12,
**characterised by**
converting the facial expression category into a specific protocol data unit.

14. Method according to claim 13,
**characterised by**
transmitting the data unit to an internet community site.

15. Method according to any of the claims 10 to 12,
**characterised by**
converting the facial expression category into a template message.

16. Method according to claim 15,
**characterised by**
outputting the message to the user.

17. Method according to claim 15 or 16,
**characterised by**
accepting input by a user to be inserted into the message.

18. Method according to claim 15, 16 or 17,
**characterised by**
transmitting the message to an internet community site.
